# FASCICULE DE BREVET EUROPEEN

(11) **EP 4 179 610 B1**
(45) Date de publication et mention de la délivrance du brevet: **16.10.2024**
(21) Numéro de dépôt: 21746524.4
(22) Date de dépôt: 06.07.2021
(51) Int. Cl.: H02K 7/116, F16H 57/08, B65G 23/08, F16B 5/10, F16B 21/02, F16H 1/28

(54) **MOTORÉDUCTEUR À ENVELOPPE CYLINDRIQUE ET MOTEUR TUBULAIRE CORRESPONDANT**
GETRIEBEMOTOR MIT EINEM ZYLINDERGEHÄUSE UND ENTSPRECHENDER ROHRMOTOR
GEARED MOTOR HAVING A CYLINDRICAL CASING AND CORRESPONDING TUBULAR MOTOR

(30) Priorité: 08.07.2020 FR 2007238; 29.09.2020 FR 2009887
(43) Date de publication de la demande: 17.05.2023
(73) Titulaire: Innovaction Technologies, 42110 Epercieux St Paul (FR)
(72) Inventeur: SAJNOVIC, Srecko, 42110 EPERCIEUX ST PAUL (FR); DENIS, Sylvain, 42300 VILLEREST (FR)
(74) Mandataire: Casalonga
(86) Numéro de dépôt international: PCT/FR2021/051248
(87) Numéro de publication internationale: WO 2022/008840

(56) Documents cités:
- FR-A1- 3 016 013
- JP-A- 2002 276 742
- US-A1- 2008 197 733
- US-A1- 2019 305 629

## Description

### Domaine technique

L'invention a pour domaine technique les motoréducteurs, et plus particulièrement les moteurs tubulaires munis de tels motoréducteurs.

De l'état de la technique antérieure, les documents suivants sont connus.

Le document US2019305629 divulgue un moteur à tambour. Le document FR3016013 divulgue un actionneur de frein à tambour et sa motorisation. Le document US2008/197733 divulgue un moteur électrique et une unité de transmission pour des actionneurs dans un véhicule à moteur. On connaît également le document JP 2002276742 illustrant l'arrière-plan technologique.

### Exposé de l'invention

L'invention a pour objet un motoréducteur comprenant un train épicycloïdal couplé à l'arbre de sortie d'un moteur. Le motoréducteur comprend une enveloppe cylindrique isolant le motoréducteur de l'extérieur et un arbre creux lié au stator du moteur et aligné avec l'arbre de sortie du train épicycloïdal, l'enveloppe cylindrique comprend un cylindre creux, deux brides avant et deux brides arrières,
les deux brides avant étant solidarisées avec le carter du train épicycloïdal, les deux brides arrières étant solidarisées avec l'arbre creux,
le cylindre creux étant muni à proximité de chacune de ses extrémités d'un ensemble de découpes périphériques associées à des découpes axiales s'étendant chacune depuis une extrémité du cylindre creux jusqu'à une découpe périphérique,
les brides avant et les brides arrières étant munies chacune de lumières axiales et d'au moins deux épaulements, chaque épaulement étant apte à coopérer avec un ensemble formé par une découpe axiale et une découpe périphérique à proximité d'une extrémité du cylindre creux, de sorte à former l'enveloppe cylindrique et à la verrouiller par rotation des brides par rapport au cylindre creux chacune des deux brides avant et chacune des deux brides arrières étant verrouillées selon des sens de rotation opposés.

Les brides arrières sont munies de lumières, qui peuvent permettre d'accommoder l'arbre creux.

Les brides avant sont munies de lumières, qui peuvent permettre d'accommoder l'arbre de sortie du train épicycloïdal.

Chaque bride peut comprendre cinq épaulements, le cylindre creux comprenant un nombre correspondant d'ensembles de découpes radiales et axiales.

Chaque épaulement peut être muni d'une gorge de sorte que le cylindre creux vienne s'engager dans la gorge lors de la rotation relative de l'épaulement et du cylindre creux.

Le moteur peut être un moteur électrique, hydraulique, pneumatique ou oléopneumatique.

L'arbre creux peut comprendre une lumière à travers laquelle l'alimentation et la commande du moteur traversent l'enveloppe cylindrique.

L'invention a également pour objet un moteur tubulaire comprenant un motoréducteur tel que défini ci-dessus, connecté à un tambour rotatif s'étendant autour de l'enveloppe cylindrique, un flasque avant solidaire de l'axe de sortie du train épicycloïdal du motoréducteur et d'un flasque arrière reposant de façon libre en rotation sur l'arbre creux (5) du motoréducteur les flasques étant solidaires du tambour de sorte que la rotation de l'axe de sortie du train épicycloïdal soit transmise au tambour et que l'axe de rotation du tambour rotatif soit coaxial avec l'axe de rotation du motoréducteur s'étendant à travers l'arbre creux et l'arbre de sortie du train épicycloïdal.

Le flasque arrière peut être muni d'un palier coopérant avec l'arbre creux de sorte à décorréler le motoréducteur de la rotation du tambour rotatif.

Un autre objet de l'invention est un système d'actionnement comprenant un moteur tubulaire tel que décrit ci-dessus, disposé dans un habillage, le système d'actionnement comprenant en outre une fixation de l'axe creux du flasque arrière sur l'habillage, et un ensemble d'entrainement couplé au flasque avant et apte à recevoir une manivelle, la fixation étant adaptée pour être ouverte lorsque le système d'actionnement est actionné avec la manivelle.

Le moteur tubulaire peut être muni de connecteurs à déconnexion rapide de sorte à isoler le moteur tubulaire de sa source d'énergie lorsque le système d'actionnement est actionné avec la manivelle.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- [Fig 1] illustre un moteur tubulaire selon l'invention,
- [Fig 2] illustre un axe creux de l'invention,
- [Fig 3] illustre une enveloppe cylindrique de l'invention,
- [Fig 4] illustre une bride arrière de l'invention,
- [Fig 5] illustre une bride avant de l'invention,
- [Fig 6] illustre un flasque arrière de l'invention,
- [Fig 7] illustre un flasque avant de l'invention, et
- [Fig 8] illustre un système d'actionnement selon l'invention.

### Description détaillée

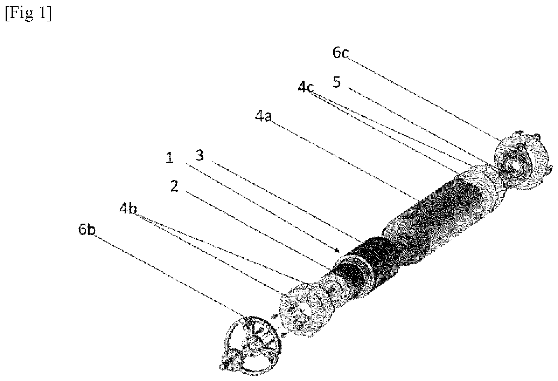

La figure 1 illustre un motoréducteur 1 comprenant un train épicycloïdal 2 monté par l'intermédiaire d'une bride en périphérie de l'arbre de sortie d'un moteur 3, l'ensemble étant contenu dans une enveloppe cylindrique 4a,4b,4c. L'enveloppe cylindrique 4a,4b,4c est fixe et comprend un cylindre creux 4a fermé à ses deux extrémités par des brides avant 4b et des brides arrière 4c.

Le motoréducteur 1 est également muni d'un arbre creux 5 fixé au stator soutenu par un flasque arrière 6c, le motoréducteur 1 étant par ailleurs muni d'un flasque avant 6b lié à l'arbre de sortie du train épicycloïdal 2.

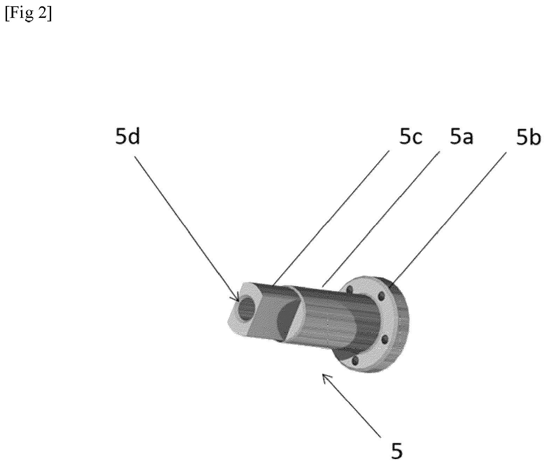

La figure 2 illustre l'arbre creux 5. On peut voir qu'il comprend un corps cylindrique 5a, muni à une extrémité d'un méplat 5b et à l'autre extrémité d'une base 5c également cylindrique, cette base étant munie de perforations conçues pour coopérer avec un système de fixation de type tiges et boulons de sorte à solidariser l'arbre creux 5 sur le stator du moteur 3. L'arbre creux 5 est percé de part en part de sorte à obtenir une lumière 5d, par l'intermédiaire de laquelle des câbles de commande et des câbles ou flexibles d'alimentation du moteur 3 peuvent transiter.

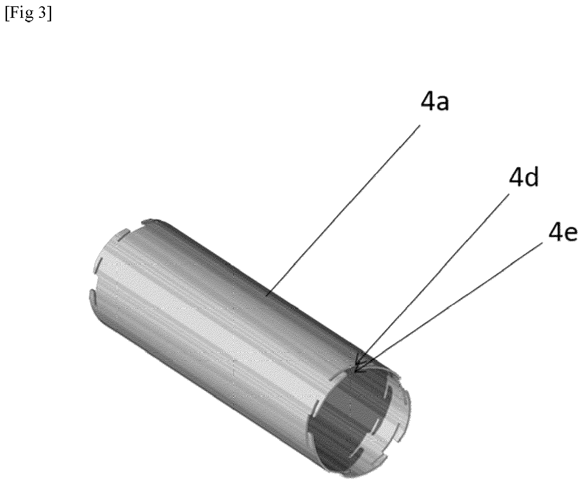

La figure 3 illustre un cylindre creux 4a comprenant à proximité de chacune de ses extrémités, un ensemble de découpes périphériques 4d associées à des découpes axiales 4e s'étendant chacune depuis une extrémité du cylindre creux 4a jusqu'à une découpe périphérique 4d. L'ensemble formé par une découpe axiale 4e et une découpe périphérique 4d est conçu de sorte qu'un épaulement 4f prévu dans une bride 4b,4c puisse être inséré en translation dans la découpe axiale 4e puis verrouillé dans la découpe périphérique 4d par rotation relative de la bride 4b,4c par rapport au cylindre creux 4a.

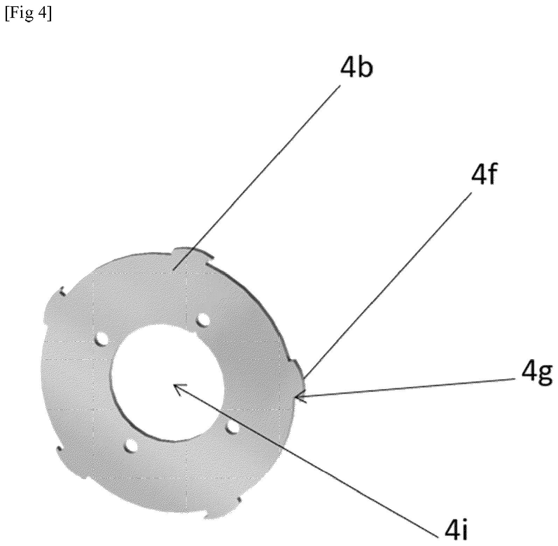

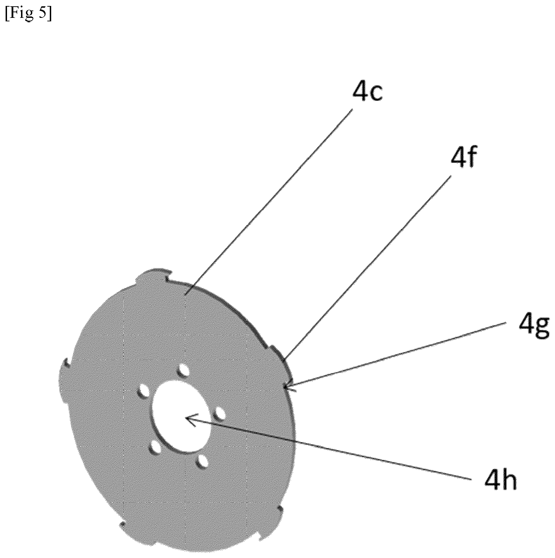

Les figures 4 et 5 illustrent des brides 4b,4c munies de tels épaulements 4f. Afin de permettre le maintien en position par rapport au cylindre creux 4a, chaque bride 4b,4c comporte au moins deux épaulements 4f, disposés notamment de façon diamétralement opposée. Afin de disposer d'un meilleur maintien, un nombre plus élevé d'épaulements 4f est considéré, par exemple cinq épaulements, disposés avec un écart angulaire sensiblement constant entre eux.

Afin d'améliorer encore le maintien de la position des brides 4b,4c par rapport au cylindre creux 4a, chaque épaulement 4f est muni d'une gorge 4g sur l'extrémités arrivant en buté avec le cylindre creux 4a lors de la rotation de la bride 4b,4c, de sorte que le cylindre creux 4a vienne s'engager dans la gorge 4g lors de la rotation. Une telle gorge 4g permet de limiter la translation radiale de la bride 4b,4c.

Une bride arrière 4c comprend une ouverture axiale 4h et est solidarisée avec l'arbre creux 5 et le stator du moteur 3 par l'intermédiaire de moyens de solidarisation amovibles, par exemple des ensembles vis/boulon ou des rivets borgnes. Une fois solidarisés, l'ouverture axiale 4h de la bride arrière 4c correspond avec le diamètre extérieur du corps de l'arbre creux 5 de sorte que les câbles de commande et des câbles ou flexibles d'alimentation du moteur puisse être connectés à l'extérieur de l'enveloppe cylindrique 4a,4b,4c.

Dans un mode de réalisation particulier, deux brides arrière 4c sont employées pour éviter un éventuel desserrage du cylindre creux 4a du fait des vibrations du système. Elles sont alors verrouillées selon des sens de rotation opposés. L'utilisation de deux brides 4c ainsi fixées au cylindre creux 4a et solidarisées ensemble par l'intermédiaire des moyens de solidarisation amovibles avec l'arbre creux 5 permet d'éliminer le risque de désengagement d'une bride 4c du fait d'une rotation opposée au sens d'engagement des épaulements 4f.

Une bride avant 4b comprend également une ouverture axiale 4i, permettant, à la différence des brides arrière 4c, de faire passer l'arbre de sortie du train épicycloïdal 2. Une bride avant 4b comprend également au moins deux épaulements 4f aptes chacun à coopérer avec un ensemble formé par une découpe axiale 4e et une découpe périphérique 4d à proximité d'une extrémité du cylindre creux 4a. Une gorge 4g est également présente à l'extrémité de chaque épaulement 4f destinée à entrer en contact avec le cylindre 4a.

Une bride avant 4b est solidarisée avec le carter du train épicycloïdal 2 par l'intermédiaire de moyens de solidarisation amovibles, par exemple des ensembles vis/boulon ou des rivets borgnes. Une fois solidarisés, l'ouverture axiale de la bride arrière 4c correspond avec l'arbre de sortie du train épicycloïdal 2 de sorte que l'enveloppe cylindrique 4a,4b,4c n'est pas soumise à la rotation de l'arbre de sortie.

Comme pour les brides arrière 4c, dans un mode de réalisation particulier, deux brides avant 4b sont employées. Elles sont alors verrouillées en rotation selon des sens opposés. L'utilisation de deux brides 4b ainsi fixées à la première enveloppe extérieure et solidarisées ensemble par l'intermédiaire des moyens de solidarisation amovibles avec l'arbre creux 5 permet d'éliminer le désengagement d'une bride du fait d'une rotation opposée au sens d'engagement des épaulements dans le cylindre creux 4a.

L'enveloppe cylindrique 4a,4b,4c ainsi constituée isole le motoréducteur 1 de l'extérieur tout en ménageant une sortie d'une part pour des câbles de commande et des câbles ou flexibles d'alimentation du moteur 3 et d'autre part pour l'axe de sortie du train épicycloïdal 2.

En ne s'appuyant pas sur un carter moteur, l'enveloppe cylindrique 4a,4b,4c permet de parfaitement isoler le moteur de l'extérieur, le protégeant ainsi d'éventuels dommages. De plus, l'axe creux 5 et l'axe de sortie épicycloïdal 2 définissent l'axe de rotation du motoréducteur 1, de sorte à pouvoir être aisément intégré dans un système mécanique sans induire d'excentricité de mouvement. En effet, il plus aisé de centrer un axe par rapport à mécanisme que de centrer un axe lié au rotor d'un moteur et un stator présentant une extension spatiale. Par ailleurs, l'enveloppe cylindrique 4a,4b,4c présente l'avantage additionnel de pouvoir être aisément démontable pour la maintenance du moteur ou du train épicycloïdal. L'état de la technique montre sur ce point des motoréducteurs scellés, dont la maintenance implique un démontage destructif de l'enveloppe impliquant ainsi qu'une nouvelle enveloppe doit être recrée à postériori.

Dans un mode de réalisation particulier, l'enveloppe cylindrique 4a,4b,4c présente en plus une isolation aux poussières et/ou à l'eau par ajout de moyens d'étanchéité à la jonction entre les brides 4b,4c et le cylindre ceux 4a, entre les brides arrière 4c et l'axe creux 5 et/ou entre les brides avant 4b et l'arbre de sortie du train épicycloïdal 2.

Afin de former un moteur tubulaire, le motoréducteur 1 ainsi constitué est disposé dans un tambour maintenu à ses deux extrémités par des flasques 6b,6c, permettant de transférer le mouvement de rotation de l'axe de sortie du train épicycloïdal 2 au tambour.

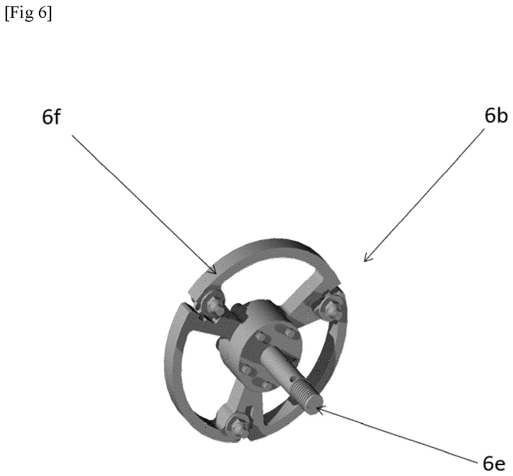

Le flasque avant 6b, illustré par la figure 6, est fixé sur l'arbre de sortie du train épicycloïdal 2 et sur le tambour. Il comprend un axe de rotation 6e ainsi que des moyens de fixation externe 6f.

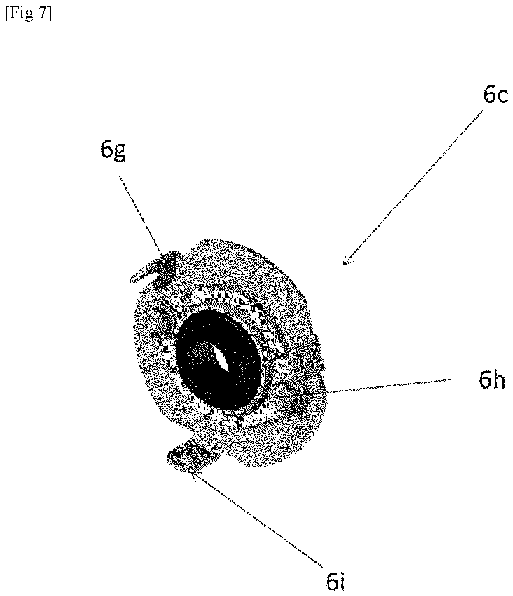

Le flasque arrière 6c, illustré par la figure 7, comprend une lumière 6g munie d'un palier 6h à travers lesquels est inséré l'arbre creux 5. Le palier 6h peut être un roulement à bille ou une garniture mécanique. Il permet le découplage de la rotation du tambour par rapport à l'arbre creux 5. Comme le flasque avant 6b, le flasque arrière 6c comprend des moyens de fixation externe 6i.

Des moyens de fixation externe 6f,6i permettant de fixer le tambour sur les flasques, et éventuellement, en plus, un élément tournant plus important.

Ces flasques 6b,6c permettent d'assurer que l'enveloppe cylindrique 4a,4b,4b et le tambour sont coaxiaux, de sorte à éviter la formation d'un moment réactif résultant d'une excentricité du tambour pouvant mener à des variations de vitesse de dévidement ou d'enroulement de la corde.

Le tambour permet d'offrir une surface de contact ou de fixation à un élément tournant plus important. C'est notamment le cas lorsque le moteur tubulaire est employé dans un système enrouleur/dérouleur, comme celui d'une couverture amovible.

Le tambour peut être cylindrique ou en forme de prisme. On citera notamment des prismes à base carrée ou hexagonale conférant des surfaces d'appui au tambour, afin d'améliorer la communication de couple à une surface tournante.

Le moteur tubulaire ainsi défini peut accepter indifféremment tout moteur aux dimensions compatibles avec l'enveloppe cylindrique, disposé de façon axiale par rapport au train épicycloïdal. Ainsi, même s'il est courant de disposer de motoréducteurs électriques présentant une telle configuration, ces derniers présentent une faible vitesse de rotation et/ou un faible couple.

Des motoréducteurs hydrauliques ou pneumatiques axiaux ne sont pas disponibles à l'heure actuelle. De tels motoréducteurs hydrauliques ou pneumatiques axiaux permettent de disposer d'un couple important à partir de circuits hydrauliques ou pneumatiques embarqués sur un véhicule, notamment des poids lourds ou des engins ferroviaires, tout en conservant un encombrement réduit.

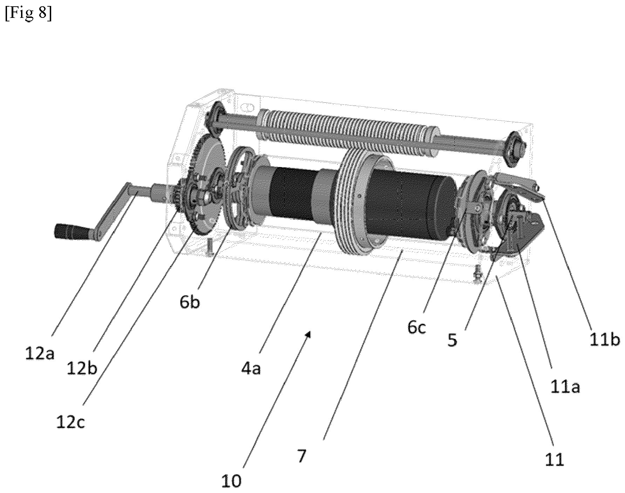

Dans un mode de réalisation particulier, illustré par la figure 8, un système d'actionnement 10 comprend un moteur tubulaire tel que décrit ci-dessus disposé dans un habillage 11, muni d'une fixation 11a,11b de l'axe creux 5 du flasque arrière 6c, et un ensemble d'entrainement 12b,12c couplé au flasque avant 6b. L'habillage 11 est notamment fixé au châssis d'un véhicule ou d'un bâtiment de sorte à limiter la réaction en retour de l'actionnement.

La fixation 11a,11b forme une pince coopérant avec les méplats 5b formés sur l'axe creux 5 de sorte à en empêcher la rotation. La rotation du moteur est alors transmise au tambour 7. Le tambour 7 permet d'enrouler ou de dérouler toute toile, tissu, couverture, bande de convoyeur, câble ou cordage.

Néanmoins, lorsqu'un défaut ou un problème d'alimentation a lieu au niveau du moteur, le système d'actionnement 10 est rendu inopérable.

Afin de restaurer une opération manuelle du système d'actionnement 10, la fixation 11a,11b peut être ouverte de sorte que l'axe creux 5 est rendu libre en rotation, tout en étant maintenu en position par le flasque arrière 6c. Les connexions du moteur, notamment hydrauliques ou pneumatiques, sont déconnectées grâce à des raccords rapides, de sorte à en réduire l'inertie. Une manivelle 12a peut alors être connectée à l'ensemble d'entrainement 12b,12c de sorte à pouvoir imprimer une rotation au tambour par l'intermédiaire de l'axe du flasque avant 6b. Les fonctions du système d'actionnement sont restaurées dans un mode d'opération manuel.

L'ensemble d'entrainement 12b,12c peut comprend des roues dentées, des pignons et/ou des couronnes dentées. Le choix judicieux des rapports d'engrenage des éléments choisis permet l'opération manuelle du système d'actionnement avec une force restreinte. Il est à noter que l'ensemble d'entrainement comprend un élément, non illustré, disposé solidairement avec l'axe 6e et engrainé avec les autres éléments.

Il est à noter que la fixation 11a,11b et l'ensemble d'entraînement 12b,12c sont solidaires de l'habillage et du moteur tubulaire par l'intermédiaire des flasques. Ils contribuent alors au maintien en position axiale du moteur tubulaire. Une garniture illustrée sur la figure 8, solidaire de l'habillage 11, permet de maintenir l'axe creux aligné lorsque la fixation 11a,11b est ouverte.

Un tel système d'actionnement permet d'éviter d'utiliser un embrayage couteux, encombrant et nécessitant une maintenance élevée pour passer d'un actionnement par le moteur à un actionnement manuel.

De plus, la maintenance d'un système d'actionnement selon l'invention permet un retrait du moteur tubulaire pour échange ou réparation alors que le tambour demeure en place dans le système. Cela est particulièrement avantageux dans la mesure où l'on est dispensé du retrait de la toile, tissu, couverture, bande de convoyeur, câble ou cordage enroulé sur le tambour. La durée et le cout de la maintenance s'en trouvent ainsi grandement réduits.

## Revendications

1. Motoréducteur comprenant un train épicycloïdal (2) couplé à un arbre de sortie d'un moteur (3), comprenant une enveloppe cylindrique (4a,4b,4c) isolant le motoréducteur (1) de l'extérieur et, un arbre creux (5) lié au stator du moteur (3) et aligné avec l'arbre de sortie du train épicycloïdal (2), l'enveloppe cylindrique (4a,4b,4c) comprenant un cylindre creux (4a), **caractérisé par le fait que** l'enveloppe cylindrique (4a,4b,4c) comprend en outre deux brides avant (4b) et deux brides arrières (4c),
les deux brides avant (4b) étant solidarisées avec le carter du train épicycloïdal (2), les deux brides arrières (4c) étant solidarisées avec l'arbre creux (5),
le cylindre creux (4a) étant muni à proximité de chacune de ses extrémités d'un ensemble de découpes périphériques (4d) associées à des découpes axiales (4e) s'étendant chacune depuis une extrémité du cylindre creux (4a) jusqu'à une découpe périphérique (4d),
les brides avant (4b) et les brides arrières (4c) étant munies chacune de lumières axiales et d'au moins deux épaulements (4f), chaque épaulement (4f) étant apte à coopérer avec un ensemble formé par une découpe axiale (4e) et une découpe périphérique (4d) à proximité d'une extrémité du cylindre creux (4a), de sorte à former l'enveloppe cylindrique (4a,4b,4c) et à la verrouiller par rotation des brides (4b,4c) par rapport au cylindre creux (4a), chacune des deux brides avant (4b) et chacune des deux brides arrières (4c) étant verrouillées selon des sens de rotation opposés.

2. Motoréducteur selon la revendication 1, dans lequel les lumières des brides arrières (4c) permettent d'accommoder l'arbre creux (5).

3. Motoréducteur selon l'une quelconque des revendications1 ou 2, dans lequel les lumières des brides avant (4b) permettent d'accommoder l'arbre de sortie du train épicycloïdal.

4. Motoréducteur selon l'une quelconque des revendications précédentes, dans lequel chaque bride comprend cinq épaulements, le cylindre creux (4a) comprenant un nombre correspondant d'ensembles de découpes radiales et axiales.

5. Motoréducteur selon l'une quelconque des revendications précédentes, dans lequel chaque épaulement (4f) est muni d'une gorge (4g) de sorte que le cylindre creux (4a) vienne s'engager dans la gorge (4g) lors de la rotation relative de l'épaulement (4f) et du cylindre creux (4a).

6. Motoréducteur selon l'une quelconque des revendications précédentes, dans lequel le moteur (3) est un moteur électrique, hydraulique, pneumatique ou oléopneumatique.

7. Motoréducteur selon l'une quelconque des revendications précédentes, dans lequel l'arbre creux (5) comprend une lumière (5d) à travers laquelle l'alimentation et la commande du moteur (3) traversent l'enveloppe cylindrique (4a,4b,4c).

8. Moteur tubulaire comprenant un motoréducteur 1 selon l'une quelconque des revendications 1 à 7 **caractérisé par le fait qu'**il comprend un tambour rotatif s'étendant autour de l'enveloppe cylindrique (4a,4b,4c), un flasque avant (6b) solidaire de l'axe de sortie du train épicycloïdal du motoréducteur et un flasque arrière (6c) reposant de façon libre en rotation sur l'arbre creux (5) du motoréducteur, les flasques étant solidaires du tambour de sorte que la rotation de l'axe de sortie du train épicycloïdal soit transmise au tambour et que l'axe de rotation du tambour rotatif soit coaxial avec l'axe de rotation du motoréducteur (1) s'étendant à travers l'arbre creux (5) et l'arbre de sortie du train épicycloïdal (2).

9. Moteur tubulaire selon la revendication 8, dans lequel le flasque arrière (6c) est muni d'un palier (6h) coopérant avec l'arbre creux (5) de sorte à décorréler le motoréducteur (1) de la rotation du tambour rotatif.

10. Système d'actionnement comprenant un moteur tubulaire selon l'une quelconque des revendications 8 ou 9 disposé dans un habillage (11), le système d'actionnement comprenant en outre une fixation (11a,11b) de l'axe creux du flasque arrière (6c) sur l'habillage (11), et un ensemble d'entrainement (12b,12c) couplé au flasque avant (6b) et apte à recevoir une manivelle (12a), la fixation (11a,11b) étant adaptée pour être ouverte lorsque le système d'actionnement est actionné avec la manivelle (12a).

11. Système d'actionnement selon la revendication 10, dans lequel le moteur tubulaire est muni de connecteurs à déconnexion rapide de sorte à isoler le moteur tubulaire de sa source d'énergie lorsque le système d'actionnement est actionné avec la manivelle (12a).

## Patentansprüche

1. Getriebemotor, der einen Planetenradsatz (2) umfasst, der mit einer Abtriebswelle eines Motors (3) gekoppelt ist, der eine zylindrische Umhüllung (4a, 4b, 4c), die den Getriebemotor (1) von der Außenseite isoliert, und eine Hohlwelle (5) umfasst, die mit dem Stator des Motors (3) verbunden und mit der Abtriebswelle des Planetenradsatzes (2) ausgerichtet ist, wobei die zylindrische Umhüllung (4a, 4b, 4c) einen Hohlzylinder (4a) umfasst, **dadurch gekennzeichnet, dass** die zylindrische Umhüllung (4a, 4b, 4c) ferner zwei vordere Flansche (4b) und zwei hintere Flansche (4c) umfasst,
wobei die beiden vorderen Flansche (4b) fest mit dem Gehäuse des Planetenradsatzes (2) verbunden sind, wobei die beiden hinteren Flansche (4c) fest mit der Hohlwelle (5) verbunden sind,
wobei der Hohlzylinder (4a) in der Nähe jedes seiner Enden mit einer Anordnung von peripheren Aussparungen (4d) versehen ist, die mit axialen Aussparungen (4e) verbunden sind, die sich jeweils von einem Ende des Hohlzylinders (4a) bis zu einer peripheren Aussparung (4d) erstrecken, wobei die vorderen Flansche (4b) und die hinteren Flansche (4c) jeweils mit axialen Öffnungen und mindestens zwei Schultern (4f) versehen sind, wobei jede Schulter (4f) dazu ausgelegt ist, mit einer Anordnung zusammenzuwirken, die aus einer axialen Aussparung (4e) und einer peripheren Aussparung (4d) in der Nähe eines Endes des Hohlzylinders (4a) gebildet ist, um die zylindrische Umhüllung (4a, 4b, 4c) zu bilden und diese durch Drehung der Flansche (4b, 4c) im Verhältnis zum Hohlzylinder (4a) zu verriegeln,
wobei jeder der beiden vorderen Flansche (4b) und jeder der beiden hinteren Flansche (4c) in entgegengesetzten Drehrichtungen verriegelt sind.

2. Getriebemotor nach Anspruch 1, wobei die Öffnungen der hinteren Flansche (4c) es gestatten, die Hohlwelle (5) aufzunehmen.

3. Getriebemotor nach einem der Ansprüche 1 oder 2, wobei die Öffnungen der vorderen Flansche (4b) es gestatten, die Abtriebswelle des Planetenradsatzes aufzunehmen.

4. Getriebemotor nach einem der vorhergehenden Ansprüche, wobei jeder Flansch fünf Schultern umfasst und der Hohlzylinder (4a) eine entsprechende Anzahl von Anordnungen aus radialen und axialen Aussparungen umfasst.

5. Getriebemotor nach einem der vorhergehenden Ansprüche, wobei jede Schulter (4f) mit einer Nut (4g) versehen ist, so dass der Hohlzylinder (4a) bei der Relativdrehung der Schulter (4f) und des Hohlzylinders (4a) in die Nut (4g) in Eingriff gelangt.

6. Getriebemotor nach einem der vorhergehenden Ansprüche, wobei der Motor (3) ein elektrischer, hydraulischer, pneumatischer oder ölpneumatischer Motor ist.

7. Getriebemotor nach einem der vorhergehenden Ansprüche, wobei die Hohlwelle (5) eine Öffnung (5d) umfasst, durch die die Stromversorgung und Steuerung des Motors (3) durch die zylindrische Umhüllung (4a, 4b, 4c) verläuft.

8. Rohrmotor, der einen Getriebemotor 1 nach einem der Ansprüche 1 bis 7 umfasst, **dadurch gekennzeichnet, dass** er eine Drehtrommel, die sich um die zylindrische Umhüllung (4a, 4b, 4c) erstreckt, eine vordere Schutzabdeckung (6b), die fest mit der Abtriebsachse des Planetenradsatzes des Getriebemotors verbunden ist, und eine hintere Schutzabdeckung (6c) umfasst, die frei drehbar auf der Hohlwelle (5) des Getriebemotors anliegt, wobei die Schutzabdeckungen fest mit der Trommel verbunden sind, so dass die Drehung der Abtriebsachse des Planetenradsatzes auf die Trommel übertragen wird und die Drehachse der Drehtrommel koaxial mit der Drehachse des Getriebemotors (1) ist, die sich durch die Hohlwelle (5) und die Abtriebswelle des Planetenradsatzes (2) erstreckt.

9. Rohrmotor nach Anspruch 8, wobei die hintere Schutzabdeckung (6c) mit einem Lager (6h) versehen ist, das mit der Hohlwelle (5) zusammenwirkt, um den Getriebemotor (1) von der Drehung der Drehtrommel zu dekorrelieren.

10. Betätigungssystem, das einen Rohrmotor nach einem der Ansprüche 8 oder 9 umfasst, der in einer Verkleidung (11) angeordnet ist, wobei das Betätigungssystem ferner eine Befestigung (11a, 11b) der Hohlachse der hinteren Schutzabdeckung (6c) an der Verkleidung (11) und eine Antriebsanordnung (12b, 12c) umfasst, die mit der vorderen Schutzabdeckung (6b) gekoppelt und dazu ausgelegt ist, eine Kurbelvorrichtung (12a) aufzunehmen, wobei die Befestigung (11a, 11b) so ausgestaltet ist, dass sie geöffnet wird, wenn das Betätigungssystem mit der Kurbelvorrichtung (12a) betätigt wird.

11. Betätigungssystem nach Anspruch 10, wobei der Rohrmotor mit schnell trennbaren Steckverbindungen versehen ist, um den Rohrmotor von seiner Stromquelle zu isolieren, wenn das Betätigungssystem mit der Kurbelvorrichtung (12a) betätigt wird.

## Claims

1. A geared motor comprising a planetary gearset (2) coupled to an output shaft of a motor (3), comprising a cylindrical casing (4a,4b,4c) isolating the geared motor (1) from the outside and, a hollow shaft (5) connected to the stator of the motor (3) and aligned with the output shaft of the planetary gearset (2), the cylindrical casing (4a,4b,4c) comprising a hollow cylinder (4a), **characterised in that** the cylindrical casing (4a,4b,4c) comprises two front flanges (4b) and two rear flanges (4c),
the two front flanges (4b) being secured to the case of the planetary gearset (2), the two rear flanges (4c) being secured to the hollow shaft (5),
the hollow cylinder (4a) being fitted, in the vicinity of each of its ends, with an assembly of peripheral cut-outs (4d) associated with axial cut-outs (4e) each extending from one end of the hollow cylinder (4a) to a peripheral cut-out (4d),
the front flanges (4b) and the rear flanges (4c) each being fitted with axial ports and at least two shoulders (4f), each shoulder (4f) being capable of cooperating with an assembly formed by an axial cut-out (4e) and a peripheral cut-out (4d) in the vicinity of one end of the hollow cylinder (4a) so as to form the cylindrical casing (4a,4b,4c) and to lock it by rotation of the flanges (4b, 4c) relative to the hollow cylinder (4a), each of the two front flanges (4b) and each of the rear flanges (4c) being locked in opposite directions of rotation.

2. The geared motor according to the claim 1, wherein the port of the rear flanges (4c) accommodates the hollow shaft (5).

3. The geared motor according to any of the any of claims 1 or 2, wherein the port of the front flanges (4b) accommodates the output shaft of the planetary gearset.

4. The geared motor according to any of the preceding claims, wherein each flange comprises five shoulders, the hollow cylinder (4a) comprising a corresponding number of assemblies of radial and axial cut-outs.

5. The geared motor according to any of the preceding claims, wherein each shoulder (4f) is provided with a groove (4g) so that the hollow cylinder (4a) engages into the groove (4g) upon relative rotation of the shoulder (4f) and the hollow cylinder (4a).

6. The geared motor according to any of the preceding claims, wherein the motor (3) is an electric, hydraulic, pneumatic or oleo-pneumatic motor.

7. The geared motor according to any of the preceding claims, wherein the hollow shaft (5) comprises a port (5d) through which the power supply and control of the motor (3) passes through the cylindrical casing (4a,4b,4c).

8. A tubular motor comprising a geared motor 1 according to any of claims 1 to 7, **characterised in that** it comprises a rotary drum extending around the cylindrical casing (4a,4b,4c), a front shroud (6b) integral with the output axle of the planetary gearset of the geared motor, and a rear shroud (6c) freely rotatably resting on the hollow shaft (5) of the geared motor, the shrouds being integral with the drum so that the rotation of the output axle of the planetary gearset is transmitted to the drum and the axis of rotation of the rotating drum is coaxial with the axis of rotation of the geared motor (1) extending through the hollow shaft (5) and the output shaft of the planetary gearset (2).

9. The tubular motor according to claim 8, wherein the rear shroud (6c) is fitted with a bearing (6h) cooperating with the hollow shaft (5) so as to decouple the geared motor (1) from the rotation of the rotating drum.

10. An actuation system comprising a tubular motor according to any of claims 8 or 9 disposed in a trim (11), the actuation system further comprising an attachment (11a,11b) of the hollow axle of the rear shroud (6c) to the trim (11), and a drive assembly (12b,12c) coupled to the front shroud (6b) and capable of receiving a crank (12a), the attachment (11a,11b) being adapted to be opened when the actuation system is actuated with the crank (12a).

11. The actuation system according to claim 10, wherein the tubular motor is fitted with quick disconnect connectors so as to isolate the tubular motor from its power source when the actuation system is actuated with the crank (12a).
